(19) Europäisches Patentamt
European Patent Office
Office européen des brevets

(11) **EP 0 504 519 B1**

(12) **EUROPEAN PATENT SPECIFICATION**

(45) Date of publication and mention
of the grant of the patent:
**17.07.1996 Bulletin 1996/29**

(51) Int Cl.6: **G02B 6/255**

(21) Application number: **91308442.2**

(22) Date of filing: **16.09.1991**

(54) **Optical fiber fusion splicer**

Vorrichtung zum Schmelzverbinden von optischen Fasern

Dispositif pour la fusion des fibres optiques

(84) Designated Contracting States:
**DE GB SE**

(30) Priority: **22.03.1991 JP 83354/91**

(43) Date of publication of application:
**23.09.1992 Bulletin 1992/39**

(73) Proprietor: **FUJIKURA LTD.**
**Kohtoh-ku Tokyo-to (JP)**

(72) Inventors:
• **Sato, Katsuo**
**Inba-gun, Chiba-ken (JP)**
• **Ozawa, Koji**
**Sakura-shi, Chiba-ken (JP)**
• **Suzuki, Isao**
**Sakura-shi, Chiba-ken (JP)**

• **Yoshinuma, Mikio**
**Yachiyo-shi, Chiba-ken (JP)**

(74) Representative: **Calderbank, Thomas Roger et al**
**MEWBURN ELLIS**
**York House**
**23 Kingsway**
**London WC2B 6HP (GB)**

(56) References cited:
DE-A- 3 724 914      US-A- 4 810 054
US-A- 4 948 412

• APPLIED OPTICS, vol. 23, no. 3, February 1, 1984, pp. 492-498; M. TACHIKURA et al.: "Fusion mass-splicing for optical fibers using electric discharges between two pairs of electrodes"

## Description

The present invention relates to an optical fiber fusion splicer which performs fusion splicing of optical fibers using an arc discharge. Such an apparatus is known, for example, from DE-A-37 24 914.

To reduce a splice loss in fusion splicing of optical fibers by the optical fiber fusion splicer it is important to optimize the amount of heat applied to the optical fibers. In the optical fiber fusion splicer which utilizes discharge heating, there is provided a function to set the amount of heating by adjusting the discharge current.

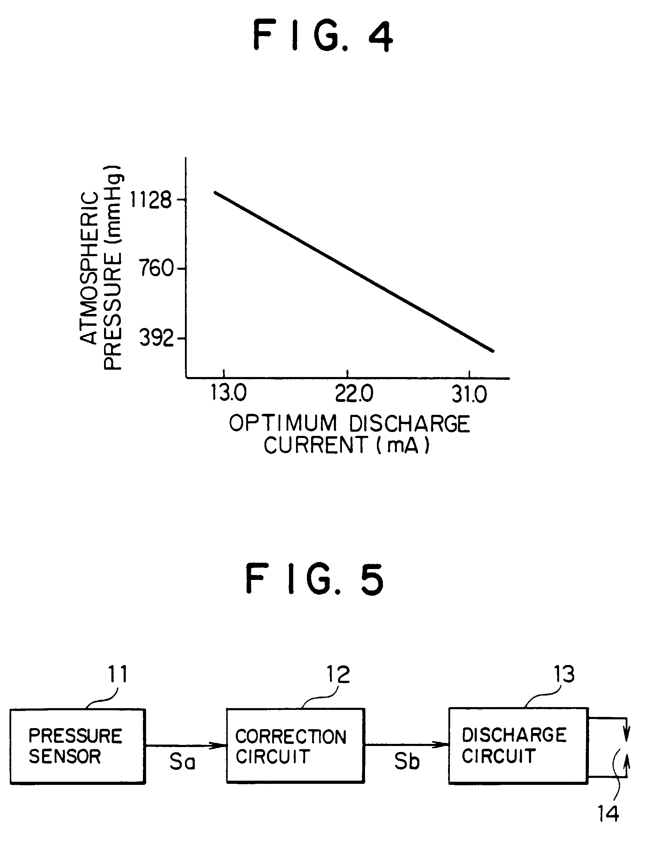

As shown in FIG. 4, the optimal discharge current in the optical fiber fusion splicer varies as the atmospheric pressure changes. It is necessary to increase the discharge current in inverse proportion to the atmospheric pressure.

When optical fibers are fusion spliced at low atmospheric pressure mountains, it is necessary to read the optimal discharge current from such a graph as shown in FIG. 4 and to manually adjust the discharge current to correspond to the optimum discharge current.

However, it is very inconvenient to manually adjust the discharge current every time when the atmospheric pressure changes.

Accordingly, it is an object of the present invention to provide an optical fiber fusion splicer which is Capable of automatically setting an optimal discharge current which is given according to the atmospheric pressure.

In view of this and other objects the present invention in a first aspect provides an optical fibre fusion splicer comprising:

discharge means for producing a electric discharge to fusion splice optical fibres; and
a pressure sensor for producing a pressure detection signal representing the surrounding atmospheric pressure;
and wherein:
the splicer further comprises:
adjusting signal generating means for producing a discharge current adjusting signal;
control signal generating means for generating a control signal on the basis of both the pressure detection signal and the discharge current adjusting signal; and
discharge current control means for controlling the discharge current in response to the control signal;
and the control signal generating means comprises characteristic providing means for providing a characteristic representing the substantially optimum of the discharge current in relation to the atmospheric pressure.

In a further aspect, the present invention provides an optical fibre fusion splicer further comprising:

wherein:

the splicer further comprises a correction circuit comprising the adjusting signal generating means (112,116), the control signal generating means (113) and the discharge current control means (204), said correction circuit being connected to the pressure sensor for providing the optimum current signal in relation to the atmospheric pressure;
(d) the discharge means are connected to the correction circuit; and
(e) and the correction circuit includes a reference current signal setting unit, the unit comprising an input unit, a microprocessing unit connected to the input unit, and a resistance type voltage divider connected to the microprocessing unit through relays and switching contacts whereby the reference current signal for providing the optimum current signal is controlled by the microprocessing unit.

In the drawings:

FIG. 1 is a block diagram illustrating an optical fiber fusion splicer according to the present invention;
FIG. 2 is a graph showing an output voltage characteristic of the pressure sensor of FIG. 1;
FIG. 3 is a graph illustrating a relationship between the atmospheric pressure and the discharge current in the optical fiber fusion splicer in FIG. 1;
FIG. 4 is a graph illustrating a relationship between the atmospheric pressure and the optimum discharge current in the optical fiber fusion splicer in FIG. 1;
FIG. 5 is a block diagram illustrating another embodiment of the present invention;
FIG. 6 is a circuit diagram showing the correction circuit in FIG. 5;
FIG. 7 is a graph showing a characteristic of the pressure sensor of FIG. 5;
FIG. 8 is a graph illustrating an altitude vs discharge current characteristic of the optical fiber fusion splicer of FIG. 5;
FIG. 9 is a graph illustrating an altitude vs. discharge current characteristic of a modified form of the optical fiber fusion splicer of FIG. 5;
FIG. 10 is a block diagram illustrating another embodiment of the present invention;
FIG. 11 is a graph in which the results of an experiment conducted on the optical fiber fusion splicer of FIG. 10 are plotted showing the control characteristic; and
FIG. 12 is a block diagram illustrating a modified form of the optical fiber fusion splicer of FIG. 10.

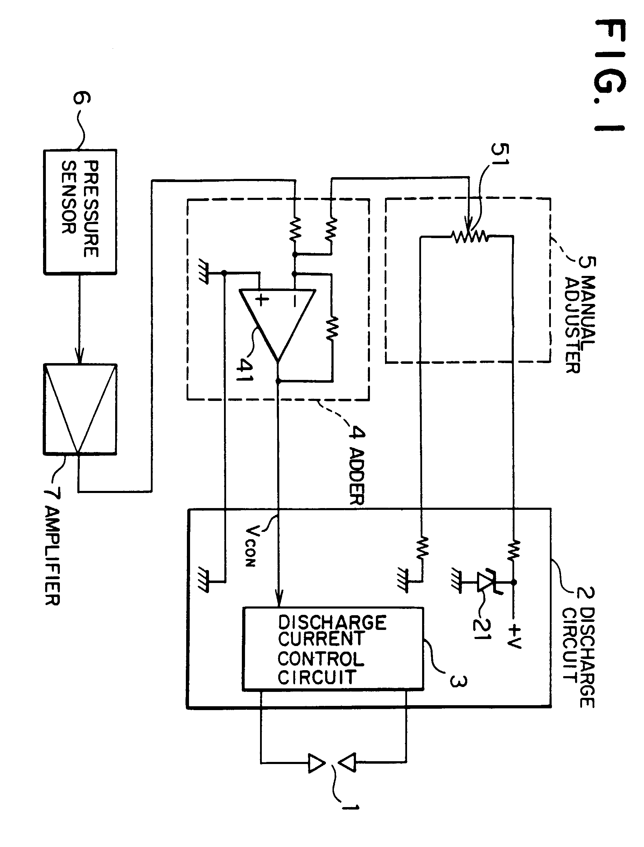

Referring to FIGS. 1 to 4, one embodiment of the present invention will be described.

In FIG. 1, discharge electrodes 1 and 1 are connected to a discharge circuit 2 for supplying a discharge current. The discharge circuit 2 includes a discharge current control circuit 3 which controls the discharge current according to a control voltage Vcon. The control voltage Vcon is provided from an adder 4, which includes an operation amplifier 41. A manually set voltage is applied from a manual adjuster 5 to the operation amplifier 41. An output of a pressure sensor 6 is amplified by an amplifier 7 and is then also sent to the operation amplifier 41. These voltages are added to apply as the control voltage Vcon to the discharge current control circuit 3. The manual adjuster 5 consists of a manually adjustable variable resistor 51. The variable resistor 51 provides a manually set voltage by dividing a voltage which has been produced by regulating a DC voltage V by a voltage regulation diode 21, the DC voltage V being supplied from a power supply circuit (not shown). As the pressure sensor 6, use may be made of a semiconductor pressure sensor utilizing piezoelectric effect of silicon. The output voltage of the pressure sensor 6 is amplified by the amplifier 7 to an appropriate level.

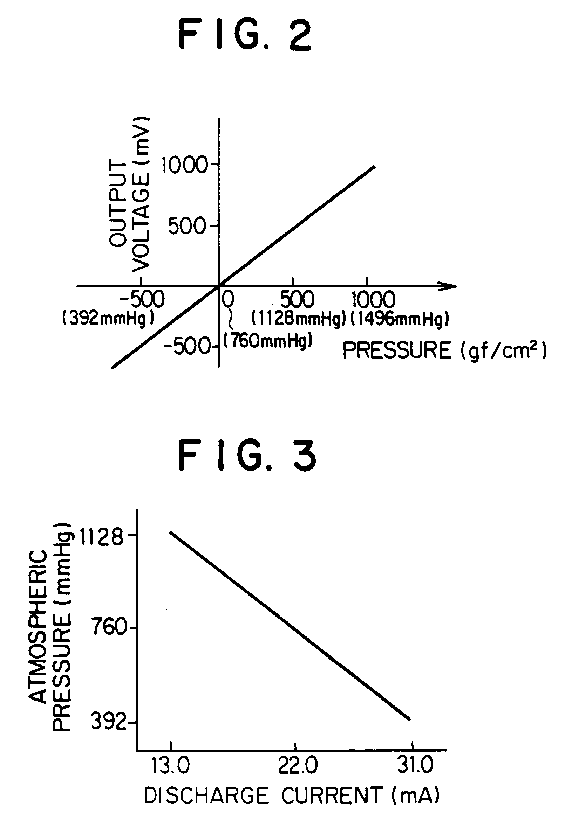

The discharge current control circuit 3 has a characteristic such that the lower the control voltage Vcon is the larger discharge current thereof becomes. The pressure vs output voltage characteristic of the pressure sensor 6 is shown in FIG. 2. As the pressure increases, the output voltage rises. The output voltage of the pressure sensor 6 is inputted to the adder 4 through the amplifier 7, and hence the pressure sensor 6 provides a control voltage Vcon which increases as the atmospheric pressure increases. Thus, as shown in FIG. 3 there is provided an atmospheric pressure vs discharge current characteristic in which the lower the atmospheric pressure is the larger the discharge current becomes. By appropriately setting the amplification degree of the amplifier 7 it is possible to make the characteristic of the system substantially in agreement with the atmospheric pressure vs optimum discharge current characteristic as shown in FIG. 4.

Thus, the automatic control such that the discharge current increases as the atmospheric pressure becomes lower is achieved, and it is, hence, not necessary to adjust the variable resistor 51 of the manual adjuster 5 when the atmospheric pressure changes.

It is to be noted that the manual adjustment of the variable resistor 51 varies the set voltage, resulting in a change in the control voltage Vcon, and hence in this manner the discharge current may be adjusted independently of the automatic control of the discharge current to the atmospheric pressure by the pressure sensor 6. This enables the discharge current to be manually adjusted when necessary due to various factors other than a variation of the atmospheric pressure, for example, a change of the kind of the optical fiber.

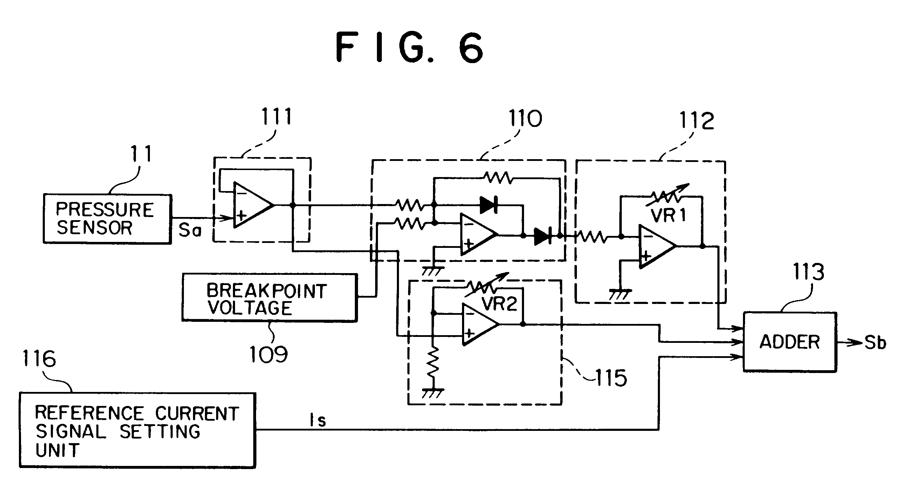

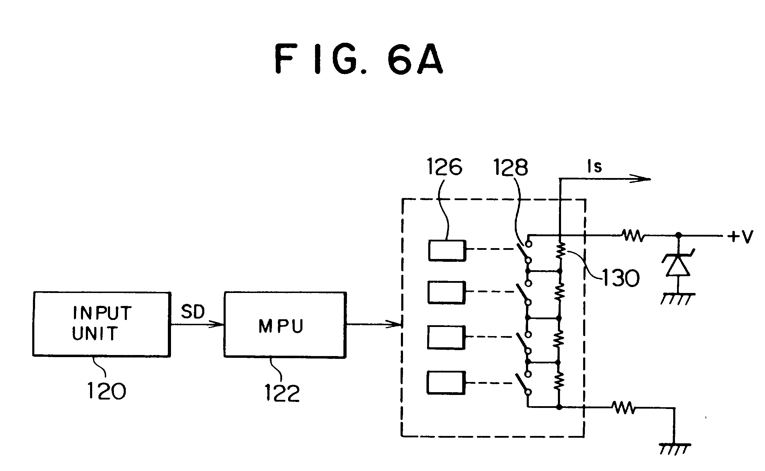

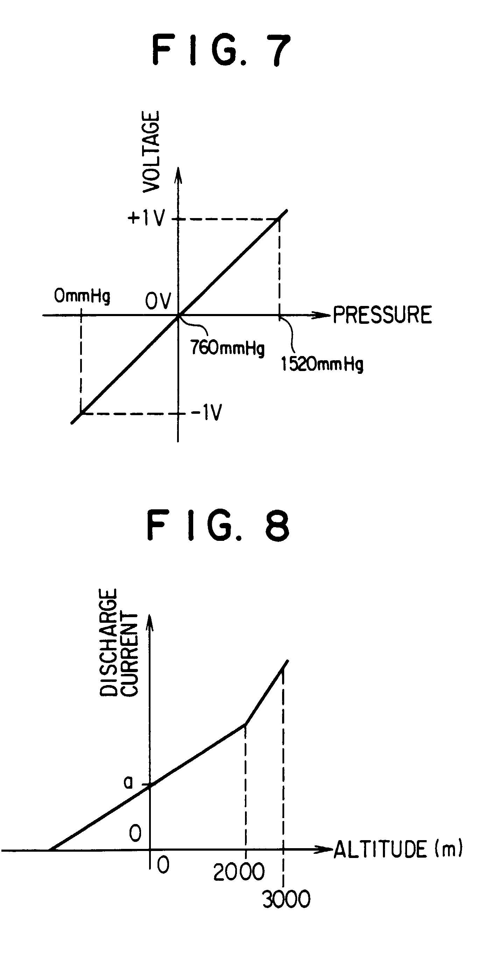

FIGS. 5 and 6 illustrate another embodiment of the present invention. In FIG. 5, reference numeral 11 designates a pressure sensor, which has a linear pressure vs voltage characteristic shown in FIG. 7. The pressure sensor 11 provides an output signal Sa representing the atmospheric pressure to a correction circuit 12, which generates a current signal Sb indicating a discharge current on the basis of the output signal Sa. The correction circuit 12 exhibits an altitude vs discharge current characteristic as plotted in FIG. 8. A discharge circuit 13 supplies a discharge current to discharge electrodes 14 on the basis of the current signal Sb.

A specific configuration of the correction circuit 12 is illustrated in FIG. 6, in which reference numeral 110 indicates an ideal diode circuit. The ideal diode circuit 110 is provided with the output signal Sa of the pressure sensor 11 through a voltage follower 111. The ideal diode circuit 110 is also supplied from a breakpoint voltage setting unit 109 with a voltage which is set to correspond to an altitude of 2000 m. In this embodiment, the output voltage of the breakpoint voltage setting unit 109 is set so that the ideal diode circuit 110 is turned off when the altitude is below 2000 m. Although in this embodiment, a conventional constant voltage circuit is used for the breakpoint voltage setting unit 109, a resistance type voltage divider 130 (FIG. 6A) and control units 120, 122, 126, 128 may be used for selecting one of several breakpoints. The output signal of the ideal diode circuit 110 is supplied to a first input terminal of the adder circuit 113 through a inverting amplifier 112. The amplification factor $\alpha$ of the inverting amplifier 112 may be adjusted by a variable resistor VR1. The output signal of the voltage follower 111 is also fed to a second input terminal of the adder circuit 113 through a non inverting amplifier 115. The amplification factor $\beta$ of the non inverting amplifier 115 may be adjusted by a variable resistor VR2. The adder circuit 113 is provided at its third input terminal with a reference current signal Is from a reference current signal setting unit 116. The reference current signal Is is set so that the discharge current has a predetermined value (value a in FIG. 8) when the output signal Sa of the pressure sensor 11 is zero, that is, the atmospheric pressure is 760 mmHg. A specific configuration of the reference current signal setting unit 116 is illustrated in FIG. 6A. The reference current signal setting unit 116 includes an input unit 120, such as panel switches, through which set data SD for setting a reference current signal is inputted to a microprocessing unit (MPU) 122. In response to the set data SD, the MPU 122 switches a relay or relays 126, and thereby a voltage divided by a resistance type voltage divider 130 is changed by switching contacts 128. In this manner, the refernce current signal Is is applied to the adder 113.

The ideal diode circuit 110 is off at an altitude below 2000 m, and in this case the adder circuit 113 adds an output signal of the non inverting amplifier 115 with the reference current signal Is to produce the current signal Sb. Thus,

$$Sb = \beta \cdot Sa + Is$$

On the other hand, at or above an altitude of about 2000 m, the ideal diode circuit 110 is turned on, so that a signal $\alpha \cdot Sa$ is outputted from the output terminal of the inverting amplifier 112. In this case, the adder circuit 113 outputs the current signal Sb:

$$Sb = \alpha \cdot Sa + \beta \cdot Sa + Is$$

$$= (\alpha + \beta)Sa + Is$$

This means that the inclination of the increment of the discharge current becomes much larger above 2000 m. Thus, the optical fiber fusion splicer of this embodiment achieves the characteristic of FIG. 8. This optical fiber fusion splicer suppressed the average splice loss of a single core single mode fiber not larger than 0.1 dB at about 3000 m.

The optical fiber fusion splicer of FIG. 6 is capable of automatically setting an optimum discharge current according to the atmospheric pressure, that is, the altitude.

Although in the optical fiber fusion splicer of FIG. 6, the inclination of the discharge current is changed at the altitude of 2000 m, there may be provided more than one breakpoint.

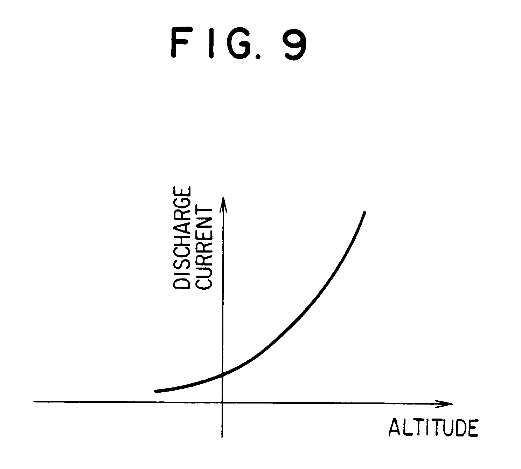

Instead of the polygonal line characteristic, the discharge current may have a smooth nonlinear curve characteristic as illustrated in FIG. 9. To generate a predetermined nonlinear function use may be of a functional characteristic generator, utilizing nonlinear characteristics of various devices. Software processing with a microcomputer may be made also for this purpose. Also for this purpose, a pressure sensor having a nonlinear characteristic may be used.

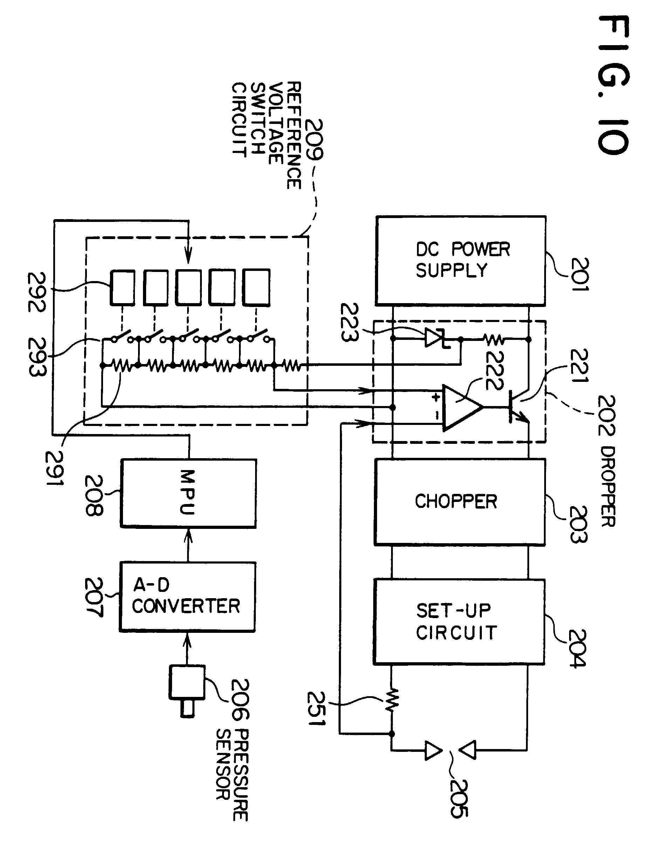

Still another embodiment of the present invention is illustrated in FIG. 10, in which a DC current of 12 V, for example, provided from a DC power supply 201 is dropped to about 10 V in voltage in a dropper 202, and is chopped in a chopper 203 to convert into an AC current of 20 to 100 KHz. The converted current is raised in voltage to several thousands V by a step-up circuit 204, for example, a transformer, and is then supplied to discharge electrodes 205, in which an aerial discharge thereby takes place to generate heat. In this event, the discharge current is detected as a voltage developed across a current detection resistor 251, and the voltage is fed back to the dropper 202, so that the output voltage of the dropper 202 is controlled. A pressure is detected by a pressure sensor 206, which provides a signal representing the pressure to a microprocessing unit (MPU) 208 through an A-D converter 207. The MPU 208 contains a program. According to the program, the MPU 208 controls a reference voltage switch circuit 209 to switch to one of the reference voltages on the basis of the pressure signal. The switched reference voltage is supplied to the dropper 202 for comparing to the voltage (which corresponds to the discharge voltage) from the current detection resistor 251.

The dropper 202 shown in FIG. 10 is simplified for facilitating understanding of the principle thereof. The dropper 202 includes a series transistor 221 and an error amplifier 222. The voltage from the current detection resistor 251 and the reference voltage are compared in the error amplifier 222 to produce a difference signal, which is outputted to the base of the series transistor 221 to control the voltage drop. The reference voltage switch circuit 209 includes a resistance type voltage divider 291 and relays 292. The voltage divided is changed by switching contacts 293 of the relays 292. One terminal of the resistance type voltage divider 291 is connected to a Zener diode 223, and hence a predetermined voltage across the Zener diode 223 is applied to the resistance type voltage divider 291. This voltage is divided by the resistance type voltage divider 291 for applying as the reference voltage to the non inverting input of the error amplifier 222.

According to an atmospheric pressure detected by the pressure sensor 206, one or more relays 292 are activated, and thereby the reference voltage is switched for applying to the error amplifier 222. As a result, the discharge voltage applied to the discharge electrodes 205 is controlled to change the discharge current so as to correspond to a change in the atmospheric pressure. In this embodiment, the discharge voltage is controlled so as to provide a discharge current P (mA) defined by the following equation:

$$P = b + 0.018\,(1013 - x)$$

where x represents an atmospheric pressure in millibar; and b a reference value of the discharge current, depending on optical fibers connected. In this embodiment, the reference value b is 16 mA. Dip switches may be used for adjustment of the reference value b to respond to the kind of optical fibers.

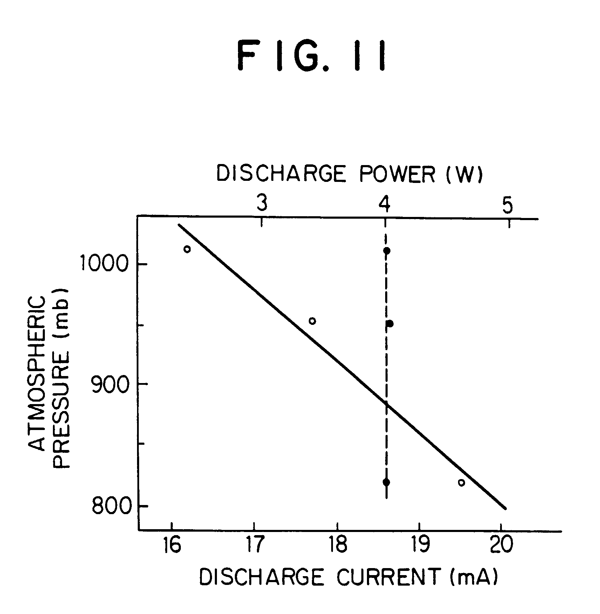

FIG. 11 illustrates a result of an experiment in which in the optical fiber fusion splicer of FIG. 10 the discharge current was controlled to correspond to changes in the atmospheric pressure, and the discharge current and the discharge power were measured as the atmospheric pressure changed. FIG. 11 shows that the discharge current was controlled in an excellent fashion to regulate the discharge power.

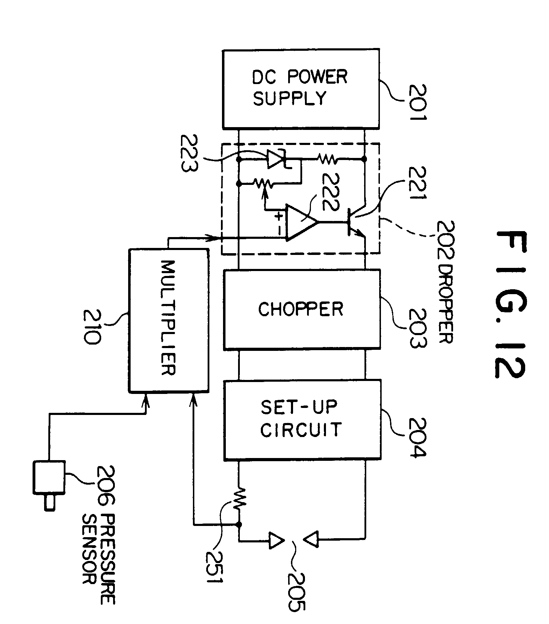

A modified optical fiber fusion splicer of FIG. 11 is illustrated in FIG. 12, in which the voltage across the current detection resistor 251 is multiplied with the output voltage of the pressure sensor 206 in a multiplier 210, and the result is feedbacked to the error amplifier 222 of the dropper 202. In this event, a drop in the atmospheric pressure causes the output voltage of the pressure sensor 206 to be lowered, so that the feedback variable is reduced. This raises the output voltage of the dropper 202 to thereby increase the discharge current, resulting in that a constant discharge power is provided. This optical fiber fusion splicer is superior to the optical fiber fusion splicer of FIG. 10 in that it requires a less number of components.

**Claims**

1.　An optical fibre fusion splicer comprising:

discharge means (1;14;205) for producing a electric discharge to fusion splice optical fibres; and

a pressure sensor (6;11;206) for producing a pressure detection signal representing the surrounding atmospheric pressure;

and characterized in that:

the splicer further comprises:

adjusting signal generating means (5; 112,115,116;209) for producing a discharge current adjusting signal;

control signal generating means (4;113;202) for generating a control signal on the basis of both the pressure detection signal and the discharge current adjusting signal; and

discharge current control means (3;13; 203,204) for controlling the discharge current in response to the control signal;

and the control signal generating means (4; 113;202) comprises characteristic providing means for providing a characteristic representing the substantially optimum of value of the discharge current in relation to the atmospheric pressure.

2. An optical fibre fusion splicer according to claim 1, wherein:

the characteristic providing means is a non-linear characteristic providing means and said characteristic is a non-linear characteristic.

3. An optical fiber fusion splicer according to claim 2 wherein:

the nonlinear characteristic providing means is adapted to produce a nonlinear signal representing the nonlinear characteristic; and

the control signal generating means (113) is adapted to generate the control signal on the basis of the pressure detection signal, the discharge current adjustment signal and the nonlinear signal.

4. An optical fiber fusion splicer according to Claim 3, wherein said nonlinear characteristic providing means produces a discharge current signal, which increases with the atmospheric pressure in the form of a polygonal line, the polygonal line comprising at least two straight lines having different gradients.

5. An optical fiber fusion splicer according to Claim 3, wherein said nonlinear characteristic providing means produces a discharge current signal, which increases with the atmospheric pressure in the form of a smooth curve.

6. An optical fiber fusion splicer according to Claim 3

wherein said nonlinear characteristic providing means comprises:

an inverting amplifier (112);

a non-inverting amplifier (115);

a reference current signal setting unit (116); and

an adder (113);

wherein the adder (113) adds outputs of the non-inverting amplifier (112) and the reference current signal setting unit (116) up to a predetermined value of the pressure, and the adder (113) adds outputs of the inverting amplifier (112), the non-inverting amplifier (115) and the reference current signal setting unit (116) over the predetermined value.

7. An optical fiber fusion splicer according to Claim 1, wherein the characteristic providing means is a linear characteristic providing means for providing a substantially optimum linear characteristic to the discharge current in relation to the atmospheric pressure.

8. An optical fibre fusion splicer according to claim 1, characterized in that:

the splicer comprises a correction circuit (112, 113, 116, 204) comprising the adjusting signal generating means (112, 116), the control signal generating means (11B) and the discharge current control means (204), said correction circuit being connected to the pressure sensor (11) for providing the optimum current signal in relation to the atmospheric pressure;

the discharge means (205) are connected to the correction circuit;

and the correction circuit further includes a reference current signal setting unit (116), the unit comprising an input unit, a microprocessing unit (122) connected to the input unit (120), and a resistance type voltage divider (130) connected to the microprocessing unit (122) through relays and switching contacts whereby the reference current signal for providing the optimum current signal is controlled by the microprocessing unit (122).

**Patentansprüche**

1. Vorrichtung zum Schmelzspleißen von Lichtleitfasern, umfassend:

ein Entladungsmittel (1; 14; 205) zum Bewirken einer elektrischen Entladung, um Lichtleitfasern schmelzzuspleißen; und

einen Drucksensor (6; 11; 206), um ein Druckdetektiersignal zu erzeugen, das den umgebenden atmosphärischen Druck darstellt;

und dadurch gekennzeichnet, daß:

die Spleißvorrichtung folgendes umfaßt:

ein Einstellsignalerzeugungsmittel (5; 112, 115, 116; 209) zur Erzeugung eines Entladungsstromeinstellsignals;

ein Steuersignalerzeugungsmittel (4; 113; 202) zur Erzeugung eines Steuersignals auf der Basis sowohl des Druckdetektiersignals als auch des Entladungsstromeinstellsignals; und

ein Entladungsstromsteuermittel (3; 13; 203, 204) zur Steuerung des Entladungsstroms als Reaktion auf das Steuersignal;

und das Steuersignalerzeugungsmittel (4; 113; 202) ein Kennlinienvorgabemittel zur Bereitstellung einer Kennlinie umfaßt, die im wesentlichen den optimalen Wert des Entladungsstroms im Verhältnis zum atmosphärischen Druck darstellt.

2. Vorrichtung zum Schmelzspleißen von Lichtleitfasern nach Anspruch 1, worin: das Kennlinienvorgabemittel ein Mittel zur Bereitstellung einer nichtlinearen Kennlinie und die Kennlinie eine nichtlineare Kennlinie ist.

3. Vorrichtung zum Schmelzspleißen von Lichtleitfasern nach Anspruch 2, worin:

das Mittel zur Bereitstellung einer nichtlinearen Kennlinie ausgebildet ist, ein nichtlineares Signal zu erzeugen, das die nichtlineare Kennlinie darstellt; und

das Steuersignalerzeugungsmittel (113) ausgebildet ist, ein Steuersignal auf der Basis des Druckdetektiersignals, des Entladungsstromeinstellsignals und des nichtlinearen Signals zu erzeugen.

4. Vorrichtung zum Schmelzspleißen von Lichtleitfasern nach Anspruch 3, worin das Mittel zur Bereitstellung einer nichtlinearen Kennlinie ein Entladungsstromsignal erzeugt, das mit dem atmosphärischen Druck in Form einer Polygonlinie zunimmt, wobei die Polygonlinie zumindest zwei gerade Linien mit unterschiedlichen Steigungen umfaßt.

5. Vorrichtung zum Schmelzspleißen von Lichtleitfasern nach Anspruch 3, worin das Mittel zur Bereitstellung einer nichtlinearen Kennlinie ein Entladungsstromsignal erzeugt, das mit dem atmosphärischen Druck in Form einer stetigen Kurve zunimmt.

6. Vorrichtung zum Schmelzspleißen von Lichtleitfasern nach Anspruch 3, worin das Mittel zur Bereitstellung einer nichtlinearen Kennlinie folgendes umfaßt:

einen invertierenden Verstärker (112);
einen nichtinvertierenden Verstärker (115);
eine Bezugsstromsignaleinstelleinheit (116); und
eine Additionsschaltung (113);
worin die Additionsschaltung (113) bis zu einem vorbestimmten Druckwert die Ausgangssignale des nichtinvertierenden Verstärkers (112) und der Bezugsstromsignaleinstelleinheit (116) addiert und die Additionsschaltung (113) über dem vorbestimmten Wert die Ausgangssignale des invertierenden Verstärkers (112), des nichtinvertierenden Verstärkers (115) und der Bezugsstromsignaleinstelleinheit (116) addiert.

7. Vorrichtung zum Schmelzspleißen von Lichtleitfasern nach Anspruch 1, worin das Kennlinienvorgabemittel ein Mittel zur Bereitstellung einer linearen Kennlinie ist, um eine im wesentlichen optimale lineare Kennlinie des Entladungsstroms im Verhältnis zum atmosphärischen Druck bereitzustellen.

8. Vorrichtung zum Schmelzspleißen von Lichtleitfasern nach Anspruch 1, dadurch gekennzeichnet, daß:

die Spleißvorrichtung weiters eine Korrekturschaltung (112, 113, 116, 204) umfaßt, die das Einstellsignalerzeugungsmittel (112, 116), das Steuersignalerzeugungsmittel (113) und das Entladungsstromsteuermittel (204) enthält, wobei die Korrekturschaltung mit dem Drucksensor (11) verbunden ist, um das optimale Stromsignal im Verhältnis zum atmosphärischen Druck zu liefern;

die Entladungsmittel (205) mit der Korrekturschaltung verbunden sind; und

die Korrekturschaltung weiters eine Bezugsstromsignaleinstelleinheit (116) enthält, die eine Eingabeeinheit, eine mit der Eingabeeinheit (120) verbundene Mikroprozessoreinheit (122) und einen Widerstands-Spannungsteiler (130) enthält, der durch Relais und Schaltkontakte mit der Mikroprozessoreinheit (122) verbunden ist, wodurch das Bezugsstromsignal zur Erzeugung des optimalen Stromsignals durch die Mikroprozessoreinheit (122) gesteuert wird.

## Revendications

1. Dispositif pour la connexion par fusion de fibres optiques, comprenant :

   des moyens de décharge (1;14;205) pour produire une décharge électrique pour connecter par fusion des fibres optiques; et

   un détecteur de pression (6;11;206) pour produire un signal de détection de pression représentant la pression atmosphérique environnante;

   et caractérisé en ce que :

   le dispositif de connexion comprend en outre :

   des moyens générateurs de signaux de réglage (5;112,115,116;209) pour produire un signal de réglage de courant de décharge;

   des moyens générateurs de signaux de commande (4;113;202) pour engendrer un signal de commande sur la base à la fois du signal de détection de pression et du signal de réglage de courant de décharge; et

   des moyens de commande de courant de décharge (3;13;203,204) pour commander le courant de décharge en réponse au signal de commande;

   et des moyens générateurs de signaux de commande (4;113;202) comprenant des moyens de mise à disposition de caractéristiques pour fournir une caractéristique représentant essentiellement l'optimum de la valeur du courant de décharge en relation avec la pression atmosphérique.

2. Un dispositif de connexion par fusion de fibres optiques selon la revendication 1, dans lequel :

   le moyen procurant une caractéristique est un moyen procurant une caractéristique non linéaire et ladite caractéristique est une caractéristique non linéaire.

3. Un dispositif de connexion par fusion de fibres optiques selon la revendication 2, dans lequel :

   le moyen procurant la caractéristique non linéaire est adapté pour produire un signal non linéaire représentant la caractéristique non linéaire; et

   les moyens générateurs de signaux de commande (113) sont adaptés pour engendrer le signal de commande sur la base du signal de détection de pression, le signal de réglage de courant de décharge et du signal non linéaire.

4. Un dispositif de connexion par fusion de fibres optiques selon la revendication 3, dans lequel le moyen procurant la caractéristique non linéaire précité produit un signal de courant de décharge qui augmente avec la pression atmosphérique sous forme d'une ligne polygonale, la ligne polygonale comprenant au moins deux lignes droites ayant des gradients différents.

5. Un dispositif de connexion par fusion de fibres optiques selon la revendication 3, dans lequel les moyens procurant la caractéristique non linéaire précitée produisent un signal de courant de décharge qui augmente avec la pression atmosphérique sous la forme d'une courbe douce.

6. Un dispositif de connexion par fusion de fibres optiques selon la revendication 3, dans lequel les moyens procurant la caractéristique non linéaire précitée comprennent :

   un amplificateur d'inversion (112);

   un amplificateur non inversant (115);

   une unité d'établissement d'un signal de courant de référence (116); et un additionneur (113);

   dans lequel l'additionneur (113) additionne les sorties de l'amplificateur non inverseur (112) et de l'unité d'établissement de signal de courant de référence (116) jusqu'à une valeur prédéterminée de la pression, et l'additionneur (113) additionne les sorties de l'amplificateur inverseur (112), de l'amplificateur non inverseur (115) et l'unité d'établissement de signal de courant de référence (116) au-dessus de la valeur prédéterminée.

7. Un dispositif de connexion par fusion de fibres optiques selon la revendication 1, dans lequel le moyen procurant une caractéristique est un moyen procurant une caractéristique linéaire pour fournir une caractéristique linéaire essentiellement d'optimum à propos du courant de décharge en relation avec la pression atmosphérique.

8. Un dispositif de connexion par fusion de fibres op-

**EP 0 504 519 B1**

tiques selon la revendication 1, caractérisé en ce que :

le dispositif de connexion comprend un circuit de correction (112,113,116,204) comprenant les moyens générateurs de signaux de réglage (112,116), les moyens générateurs de signaux de commande (113) et les moyens de commande de courant de décharge (204), ledit circuit de correction étant relié au détecteur de pression (11) pour fournir un signal de courant d'optimum en relation avec la pression atmosphérique;

des moyens de décharge (205) sont reliés au circuit de correction;

et le circuit de correction comprend en outre une unité d'établissement de signaux de courant de référence (116), l'unité comprenant une unité d'entrée, et une unité microprocesseur (122) reliée à l'unité d'entrée (120), et un diviseur de tension du type à résistance (130) relié à l'unité de microprocesseur (122) par l'intermédiaire de relais et des contacts de commutation, de façon que le signal de courant de référence pour fournir le signal de courant d'optimum soit commandé par l'unité de microprocesseur (122).

# FIG. 1

EP 0 504 519 B1

5 MANUAL ADJUSTER

2 DISCHARGE CIRCUIT

51

+V

21

3

4 ADDER

41

V_CON

DISCHARGE CURRENT CONTROL CIRCUIT

1

6

PRESSURE SENSOR

7 AMPLIFIER

# FIG. 2

# FIG. 3

# F I G. 4

# F I G. 5

# F I G. 6

F I G. 6A

# F I G. 7

# F I G. 8

# F I G. 9

# FIG. 10

209 REFERENCE VOLTAGE SWITCH CIRCUIT

292
293
291

DC POWER SUPPLY — 201

223

222

221

202 DROPPER

MPU — 208

A-D CONVERTER — 207

206 PRESSURE SENSOR

CHOPPER — 203

SET-UP CIRCUIT — 204

251

205

# F I G. 11

FIG.12